# EUROPÄISCHE PATENTANMELDUNG

(11) **EP 0 919 766 A1**
(43) Veröffentlichungstag der Anmeldung: **02.06.1999**
(21) Anmeldenummer: 98121258.2
(22) Anmeldetag: 19.11.1998
(51) Int. Cl.: F21V 8/00

(54) **Faseroptische Anordnung zur Beleuchtung eines lichtdurchlässigen Motiv- oder Informationsträgers, wie Verkehrs- oder Hinweisschilder oder Reklametafeln**

(30) Priorität: 26.11.1997 DE 19752392
(71) Anmelder: Schott Glas, 55122 Mainz (DE); CARL-ZEISS-STIFTUNG trading as SCHOTT GLASWERKE, 55122 Mainz (DE)
(72) Erfinder: Gaydoul, Ekkehard, 64401 Gross-Bieberau (DE)
(74) Vertreter: Fuchs Mehler Weiss & Fritzsche

(57) **Zusammenfassung**

Um Verkehrs- oder Hinweisschilder bzw. Reklametafeln bei ungünstigen Lichtverhältnissen gut sichtbar zu gestalten, werden vermehrt selbstleuchtende Systeme, insbesondere solche mit einer faseroptischen Beleuchtungsanordnung, eingesetzt.

Die zu beleuchtenden Schilder und Tafeln bestehen jeweils aus einer oder mehreren, aneinandergelegten, als Display fungierenden Kunststoffscheiben (2), in die das aus der faseroptischen Anordnung (1) austretende Licht parallel zur Displayebene eingekoppelt wird. Vor bzw. an den Scheiben (2) sind die zu durchleuchtenden transparenten Zeichen oder Motive angebracht. Um die Beleuchtungsqualität zu verbessern und die Herstellungskosten zu senken, sieht die Erfindung vor, daß die faseroptische Anordnung aus entsprechend den jeweiligen Displayanforderungen schild- oder tafelspezifisch modulartig zusammengesetzten Komponenten (3,4) eines faseroptischen Standardsystem mit standardisiert unterschiedlichen vielarmigen Lichtleitern und Lichtaustrittskörpern (7) als optische Vorsätze an den Einzelarmen, die eine Anpassung des Abstrahlwinkels bei gleichmäßig hoher Lichtstärke über den gesamten Winkelbereich bewirken, besteht.

## Beschreibung

Die Erfindung bezieht sich auf eine faseroptische Anordnung zur Beleuchtung eines lichtdurchlässigen Motiv- oder Informationsträgers, wie Verkehrs- oder Hinweisschilder oder Reklametafeln, der aus einer oder mehreren aneinandergelegten, als Display fungierenden Kunststoffscheiben besteht, in die das aus der faseroptischen Anordnung austretende Licht parallel zur Displayebene eingekoppelt wird, der Mittel zur flächigen Lichtverteilung aufweist und vor bzw. auf dem die zu durchleuchtenden transparenten Informationen oder Motive angebracht sind.

Um Verkehrs- oder Hinweisschilder oder Reklametafeln (Werbeanlagen) bei ungünstigen Lichtverhältnissen (nachts, in Tunnels, etc.) gut sichtbar zu gestalten, werden neben mit Scheinwerfern von außen angestrahlten Schildern/Tafeln vermehrt selbstleuchtende Systeme eingesetzt. Standard ist gemäß dem Stand der Technik ein geschlossenes System mit transparenten (Glas-)Fronten mit einer Innenbeleuchtung, vorzugsweise durch Leuchtstoffröhren. Die wesentlichen Nachteile dieser Ausführung sind:

Probleme mit Wasserdichtigkeit, Anfälligkeit gegen Vandalismus, aufwendige Wartungstätigkeiten sowie ein relativ ungleichmäßiges optisches Erscheinungsbild des derart beleuchteten Schildes.

Es sind auch faseroptisch beleuchtete Motiv- oder Informationsträger bekannt, die keine Schwächen hinsichtlich der vorbeschriebenen mechanischen Beanspruchung haben und die auch ein deutlich verbessertes Erscheinungsbild besitzen.

Bei diesen beispielsweise durch die DE 295 08 596 U1 bekannt gewordenen faseroptisch beleuchteten Motiv- bzw. Informationsträgern besteht der zu beleuchtende Träger aus einer oder mehreren aneinandergelegten Kunststoffscheiben, welche parallel zur Displayebene faseroptisch beleuchtet werden. Mikrostrukturen in den Scheiben oder mechanisch aufgebrachte Modifikationen der aneinandergrenzenden Oberflächen bei Mehrscheibensystemen, die typischerweise aus Acrylglas bestehen, sorgen für eine gleichmäßige Lichtverteilung über die gesamte Scheibenfläche. Zur Darstellung der gewünschten Zeichen (Informationen) und Motive werden bei Mehrscheibensystemen spezielle Folien (z.B. "Diamond Grade" der Fa. 3M) außen auf die Scheiben aufgeklebt, bei mikrostrukturierten Scheiben werden die zu durchleuchtenden Zeichen (Informationen) und Motive auf- bzw. angelegt.

Das verwendete faseroptische Bauteil ist speziell an die Dimensionen des zu beleuchtenden Displays ausgebildet. Zur Beleuchtung dient in den meisten Fällen eine Entladungslampe.

Im bekannten Fall werden die Lichtleiterbündel direkt mit ihren Lichtaustrittsenden an den Kunststoffscheiben angekoppelt. Dadurch ist die Eindringtiefe des das faseroptische Bauteil diffus verlassenden Lichtes in das zu beleuchtende Objekt begrenzt. Auch wenn die Leistung der das faseroptische Bauteil beleuchtenden Lampe gesteigert ist, ist der Leuchtdichtegradient im Objekt selbst relativ groß. Ferner ist dadurch die Länge der Einzelarme des faseroptischen Bauteils begrenzt, wodurch die Wartung der Hinweisschilder, die an schwer zugänglichen Stellen aufgestellt werden müssen (z.B. über Fahrbahnen), erschwert ist.

Da im bekannten Fall für jedes Display eine angepaßte faseroptische Beleuchtungsauordnung als Unikat entworfen und gefertigt wird, ist zudem der Aufwand sehr hoch mit entsprechend hohen Produktionskosten.

Der Erfindung liegt die Aufgabe zugrunde, die eingangs bezeichnete faseroptische Anordnung zur Beleuchtung von Motiv- oder Informationsträgern so auszubilden, daß der Leuchtdichtegradient bei vergleichsweiser geringer Lamperleistung deutlich verringert, die Wartungsfreundlichkeit bei an unzugänglichen Stellen angebrachten Displays erhöht und die Produktionskosten für die faseroptische Beleuchtungsanordnung gesenkt werden.

Die Lösung dieser Aufgabe gelingt gemäß der Erfindung dadurch, daß die faseroptische Anordnung entsprechend den jeweiligen Displayanforderungen spezifisch aus standardisierten Komponenten eines faseroptischen Standardsystems mit standardisiert unterschiedlichen vielarmigen Lichtleitern modulartig zusammengefügt ist, und an den Einzelarmen Lichtaustrittskörper als optische Vorsätze, die eine Anpassung des Abstrahlwinkels bei gleichmäßig hoher Lichtstärke über den gesamten Winkelbereich bewirken, angeordnet sind.

Eine Verwendung von optischen Vorsätzen vor den Einzelarmen des Lichtleiterbündels bewirkt eine größere, gerichtete Eindringtiefe des das faseroptische Bauteil verlassenden Lichtes in das zu beleuchtende Objekt. Dadurch wird mit Vorteil sowohl eine Reduktion der Leistung der beleuchtenden Lampe ermöglicht als auch der Leuchtdichtegradient im Objekt selbst deutlich verringert.

Der optische Vorsatz ist vorzugsweise ein Lichtaustrittskörper für faseroptische Lichtleiter gemaß der DE 42 25 323 C1, bei dem sich an das Lichtaustrittsende ein sich verjüngender Verlängerungsabschnitt anschließt, dessen Mantel- und/oder Endflächen Lichtaustrittsflächen bilden.

Die beste Abstrahlcharakteristik erhält man dabei mit einem Lichtaustrittskörper, der einen kegelstumpfartigen Mittelbereich aufweist, an den sich ein sich konisch verjüngender Verlängerungsabschnitt anschließt. Der Verlängerungsabschnitt kann auch die Form einer Pyramide, eines Kegel- oder Pyramidenstumpfes oder eines ähnlichen Gebildes haben.

Der im vorstehenden Sinne ausgebildete optische Vorsatz bewirkt eine Anpassung des Abstrahlwinkels bei gleichmäßig hoher Lichtstärke über den gesamten Winkelbereich, wodurch die insoweit beschriebenen Vorteile erzielt werden. Darüber hinaus werden die Aussagen der vorgenannten DE-Schrift zum Offenbarungsumfang der Beschreibung der vorliegenden Erfindung gemacht.

Die verbesserten optischen Eigenschaften ermöglichen ferner den Einsatz von größeren Längen der Einzelarme des faseroptischen Bauteils und damit eine einfache Wartung der Beleuchtungsanordnung auch von Schildern, die an besagten unzugänglichen Stellen angebracht sind.

Die Steigerung der Lichtausbeute durch den optischen Vorsatz ist zudem so groß, daß das Schild bzw. die Tafel mit einer Hologenreflektorlampe mit maximal nur 50 Watt Leistung betrieben werden kann.

Durch die Verwendung von in großen Stückzahlen produzierten Standardsystemen wird schließlich eine wirtschaftlichere Produktion ermöglicht (Stückpreis ca. 30 % billiger als bei vergleichbaren spezifisch hergestellten faseroptischen Systemen nach dem Stand der Technik). Die Anpassung an die Displayanforderungen erfolgt durch die Variation der Anzahl der verwendeten standardisierten Bauteile, deren Armzahl sowie die Charakteristik der optischen Elemente. Typischerweise sind ca. 120 Einzelarme ausreichend für die Ausleuchtung von 1 m² Displayoberfläche.

Als faseroptisches Standardsystem, aus dessen Standardkomponenten modulartig die angepaßte Beleuchtungsanordnung zusammengestellt wird, findet vorzugsweise ein System Anwendung, wie es in dem SCHOTT-Handbuch "Wechselzeichengeber nach dem Schotttsystem" vom März 1996 für Wechselzeichensignalgeber mit Faseroptik beschrieben wird.

Dieses Standardsystem besteht aus:
- Beleuchtungselementen
- Filtern
- Lichtleitern mit Vorsatzoptiken.

Die Beleuchtungselemente sind der zentrale Baustein des Systems. In innen werden kompakt die Reflektorlampe, das einzige Verschleißteil des Systems, Lichtleiterenden und ggf. Farbfilter montiert. Sie sind so konstruiert, daß eine homogene Ausleuchtung der Lichtleiterenden gewährleistet ist. Enthält das jeweilige Beleuchtungselement einen Lichtteiler, so ist ein einfacher Aufbau einer Sicherheitsschaltung mit einer Reservelampe möglich, was bedeutet, daß im Fall des Ausfalles einer Hauptlampe eine Reservelampe das System mit unveränderten lichttechnischen Eigenschaften weiterbetreiben kann.

Dieses Beleuchtungselement mit einem Lichtteiler ermöglicht es auch, daß eine Lampe über den Lichtteiler gleichzeitig zwei Lichtleiter beleuchten kann. Dadurch wird die notwendige Zahl der Reflektorlampen und die notwendige elektrische Ausrüstung kostengünstig reduziert.

Hinsichtlich der Lichtleiter mit Vorsatzoptiken weist das Standard-System eine Vielzahl von Lichtleitern auf, die sich in der Anzahl von Einzelarmen, der Länge der Lichtleiter und der Abstrahlcharakteristik/Abstrahlwinkel der Vorsatzoptik unterscheiden. So enthält das System in standardisierten Komponenten 20-, 40-, 60-, 80-, 100-, 105- und 120-armige Lichtleiter in jeweils unterschiedlichen standardisierten Längen, u.a. mit einem aktiven Einzelarmdurchmesser von 1.0 - 1,5 mm.

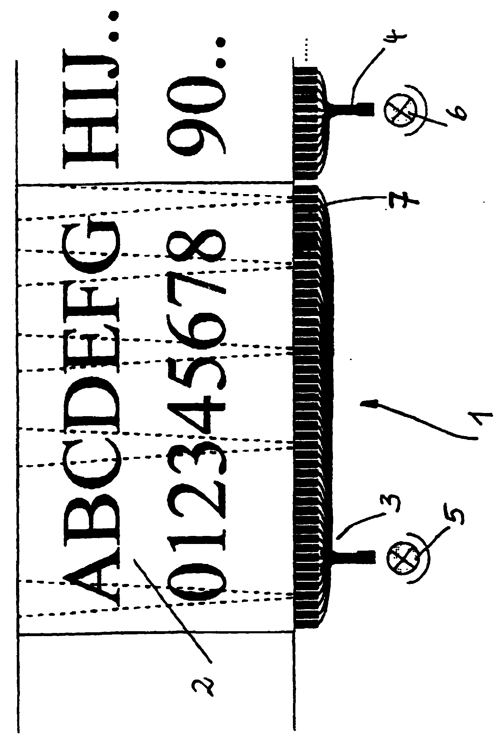

In der einzigen Figur der Patentzeichnung ist zur Verdeutlichung der Erfindung - stellvertretend für eine Vielzahl von Möglichkeiten - ein Ausführungsbeispiel der Erfindung für eine faseroptische Einrichtung 1 zur Beleuchtung eines lichtdurchlässigen Informationsträgers, einer als Display fungierenden Glas- oder Kunststoffscheibe 2, die symbolisch Buchstaben A, B, C... und Ziffern 0, 1, 2, 3... als anzuzeigende Informationen trägt, dargestellt.

Die faseroptische Anordnung 1 in der Zeichnung ist aus zwei standardisierten Modulen 3,4 eines faseroptischen Standardsystems mit standardisiert unterschiedlichen vielarmigen Lichtleitern zusammengesetzt. Die Zahl und Ausbildung der Module richtet sich nach den entsprechenden Displayanforderungen. Jedem der Module 3 und 4 ist eine Lampe 5 bzw. 6 zur Beleuchtung des Informationsträgers zugeordnet. Ferner weist jeder Einzelarm des Moduls 5 bzw. 6 einen Lichtaustrittskörper 7 als optischen Vorsatz auf, der eine Anpassung des Abstrahlwinkels bei gleichmäßg hoher Lichtstärke über den gesamten Winkelbereich bewirkt. Diese Lichtaustrittskörper 7 können typischerweise entsprechend dem eingangs zitierten deutschen Patent DE 42 25 323 C 1 ausgebildet sein.

Mittels der Lichtaustrittskörper 7 wird das am der faseroptischen Anordnung 1 bzw. den Modulen 3, 4 austretende Licht parallel zur Displayebene in die Kunststoff- oder Glasscheibe 2 eingekoppelt, die bekannte Mittel zur flächigen Lichtverteilung aufweist, so daß der gesamte Informationsträger gleichmäßig ausgeleuchtet ist.

Die faseroptische Anordnung 1, d.h. die Module 3 und 4, können aus Glasfasern oder auch aus Kunststofffasern bestehen.

## Patentansprüche

1. Faseroptische Anordnung (1) zur Beleuchtung eines lichtdurchlässigen Motiv- oder Informationsträgers, wie Verkehrs- oder Hinweisschilder oder Reklametafeln, der aus einer oder mehreren aneinandergelegten, als Display fungierenden Scheiben (2) besteht, in die das aus der faseroptischen Anordnung (1) austretende Licht parallel zur Displayebene eingekoppelt wird, der Mittel zur flächigen Lichtverteilung aufweist und vor bzw. auf dem die zu durchlachtenden transparenten Informationen oder Motive (A, B, C..; 0, 1, 2..) angebracht sind, **dadurch gekennzeichnet,** daß die faseroptische Anordnung (1) entsprechend den jeweiligen Displayanorderungen spezifisch aus standardisierten Komponenten (3, 4) eines faseroptischen Standardsystems mit standardisiert unterschiedlichen vielarmigen Lichtleitern modulartig zusammengefügt ist, und an den Einzelarmen Lichtaustrittskörper (7) als optische Vorsätze, die eine Anpassung des Abstrahlwinkels bei gleichmäßig hoher Lichstärke über den gesamten Winkelbereich bewirken, angeordnet sind.
